# EUROPEAN PATENT APPLICATION

(11) **EP 4 813 561 A1**
(43) Date of publication of application: **30.09.2026**
(21) Application number: 24913499.0
(22) Date of filing: 20.12.2024
(51) Int. Cl.: B23K 26/362, B23K 37/04, B23K 26/16, H01M 4/04, H01M 50/531

(54) **ELECTRODE NOTCHING APPARATUS AND ELECTRODE NOTCHING METHOD**

(30) Priority: 26.12.2023 KR 20230191911; 22.01.2024 KR 20240009752
(71) Applicant: LG Energy Solution, Ltd., Seoul 07335 (KR)
(72) Inventor: YOU, Jong Seong, Daejeon 34122 (KR); KIM, Min Ki, Daejeon 34122 (KR)
(74) Representative: Goddar, Heinz J.
(86) International application number: PCT/KR2024/020900
(87) International publication number: WO 2025/143706

(57) **Abstract**

The present invention provides an electrode notching apparatus including: a laser irradiating unit 100 processing an electrode sheet 50 by irradiating a laser to a notching point N of the electrode sheet 50; a jig 200 disposed facing the laser irradiating unit 100 with the electrode sheet 50 therebetween, supporting the electrode sheet 50 and comprising a first jig 210 and a second jig 220 spaced apart by a predetermined interval so that the laser processing the electrode sheet 50 passes through therebetween; a porous block 300 disposed between the first jig 210 and the second jig 220, formed of a porous material and comprising a first part 310 and a second part 320 spaced apart by a predetermined interval so that the laser processing the electrode sheet 50 passes through therebetween and discharging gas into an interspace between the first part 310 and the second part 320; and a gas supply part 400 introducing gas into the porous block 300.

## Description

### [TECHNICAL FIELD]

This application claims the benefit of priority based on Korean Patent Application No. 10-2023-0191911 filed on December 26, 2023 and Korean Patent Application No. 10-2024-0009752 filed on January 22, 2024. The entire content disclosed in the document of the patent applications is included as a part of this specification.

The present invention relates to an electrode notching apparatus and an electrode notching method, and more particularly, to an electrode notching apparatus and an electrode notching method capable of solving or alleviate the problem of the electrode sheet being damaged or contaminated by the fume generated during notching due to accumulation in or adherence to an object (jig) located near a notching point.

### [BACKGROUND ART]

As the demand for mobile devices, electric vehicles, etc. increases, the demand for secondary batteries is rapidly increasing. In particular, lithium secondary batteries with high energy density and voltage among secondary batteries are commercialized and widely used.

Generally, the manufacturing of such lithium secondary batteries are completed by applying and drying an electrode mixture containing an electrode active material, a conductive agent, a binder, etc. on an electrode collector, manufacturing an electrode, stacking the manufactured electrode with a separator, and then sealing a battery case with the same embedded therein together with an electrolyte solution.

Here, the electrode is manufactured by forming an electrode tab on an electrode sheet by a notching process including a coated area where an electrode active material is applied and a non-coated area where an electrode active material is not applied, and then cutting the same to a predetermined length.

Generally, the electrode tab notching process is performed using a punch and a jig including a cutting section having a shape corresponding to the electrode tab, and recently, in order to form an electrode with more precise dimensions, the notching is performed using a laser.

However, the conventional electrode tab notching device using a laser causes a problem in that foreign substances such as fume generated during notching accumulate in or adhere to the pattern hole of the pattern jig, thereby damaging or contaminating the electrode sheet.

Therefore, improvement of above-described problem is necessary.

### [DISCLOSURE]

### [TECHNICAL PROBLEM]

In order to solve above-described problems, it is an object of the present invention to provide an electrode notching apparatus and an electrode notching method capable of solving or alleviate the problem of the electrode sheet being damaged or contaminated by foreign substances such as the fume generated during notching due to accumulation in or adherence to a jig located near a notching point.

It is an object of the present invention to provide an electrode notching apparatus and an electrode notching method capable of extending the cleaning cycle of a jig and maintain the optimal environment set for notching for a long time.

It is an object of the present invention to provide an electrode notching apparatus and an electrode notching method capable of improving productivity, quality and uniformity of electrodes and secondary batteries, and reducing the maintenance cost of the electrode notching apparatus.

It is an object of the present invention to provide an electrode notching apparatus and an electrode notching method capable of correctly and effectively processing an electrode sheet even when a porous block is disposed between jigs.

It is an object of the present invention to provide an electrode notching apparatus and an electrode notching method wherein gas is uniformly and stably discharged from a porous block.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problem, the present invention provides an electrode notching apparatus 10 including a laser irradiating unit 100, a jig 200, a porous block 300 and a gas supply part 400.

The laser irradiating unit 100 may process the electrode sheet 50 by irradiating a laser to a notching point N thereof.

The jig 200 may be disposed facing the laser irradiating unit 100 with the electrode sheet 50 interposed therebetween.

The jig 200 may support the electrode sheet 50.

The jig 200 may include a first jig 210 and a second jig 220.

The first jig 210 and the second jig 220 may be spaced apart by a predetermined interval so that the laser that processes the electrode sheet 50 may pass through therebetween.

The porous block 300 may be disposed facing the laser irradiating unit 100 with the electrode sheet 50 therebetween.

The porous block 300 may be disposed between the first jig 210 and the second jig 220.

The porous block 300 may be formed of a porous material.

The porous block 300 may include a first part 310 and a second part 320.

The first part 310 and the second part 320 may be spaced apart by a predetermined interval so that the laser that processes the electrode sheet 50 may pass through therebetween.

The first part 310 and the second part 320 may discharge gas into an interspace between the first part 310 and the second part 320.

The gas supply part 400 may introduce gas into the porous block 300.

In one embodiment, the first part 310 and the second part 320 may cover front end surfaces of the first jig 210 and the second jig 220, respectively.

In one embodiment, the first part 310 and the second part 320 may be in contact with front end potions of the first jig 210 and the second jig 220, respectively.

In one embodiment, the first jig 210 and the second jig 220 may be in contact with the electrode sheet 50.

The first part 310 and the second part 320 may be in contact with or adjacent to the electrode sheet 50.

In one embodiment, a width D2 of a section between the first jig 210 and the second jig 220 where the electrode sheet 50 is not supported may be equal to a width D1 between the first part 310 and the second part 320.

In one embodiment, one side surfaces of the first jig 210 and the second jig 220 in contact with the electrode sheet 50 and one side surfaces of the first part 310 and the second part 320 in contacts with or adjacent to the electrode sheet 50 may together form a single spherical surface or a single planar surface.

In one embodiment, one side surfaces S1 and S2 of the first part 310 and the second part 320 in contact with or facing the electrode sheet 50 or pores provided on the one side surfaces S1 and S2 of the first part and the second part in contact with or facing the electrode sheet 50 may be blocked so as to prevent discharge of gas toward the electrode sheet 50.

In one embodiment, the electrode notching apparatus 10 may further include an inlet 512 for sucking in foreign matter and gas.

The laser irradiating unit 100 and the electrode sheet 50 may be disposed at one side of the first jig 210, the second jig 220, the first part 310 and the second part 320 in a first direction.

The first jig 210 and the second jig 220 may be disposed at one side and other side in a second direction intersecting the first direction, respectively.

The first part 310 and the second part 320 may be disposed at one side and other side in the second direction, respectively.

The inlet 512 may be disposed adjacent to the notching point N, the first part 310, and the second part 320.

The inlet 512 may be disposed at one side or other side of the notching point N, the first part 310 and the second part 320 in a third direction intersecting the first direction and the second direction.

In one embodiment, the porous block 300 may include a third part 330 and a fourth part 340.

The third part 330 may be coupled to the first part 310.

The third part 330 may introduce gas into the first part 310.

The fourth part 340 may be coupled to the second part 320.

The fourth part 340 may introduce gas into the second part 320.

The sizes of the third part 330 and the fourth part 340 may be larger than the sizes of the first part 310 and the second part 320, respectively.

The gas supply part 400 may introduce gas into the third part 330 and the fourth part 340.

In one embodiment, the gas supply part 400 may include a gas supply, a gas supply pipe 410, and a gas accommodating space 420.

A first end of the gas supply pipe 410 may be connected to the gas supply.

The gas accommodating space 420 may be connected to the third part 330, the fourth part 340 and a second end of the gas supply pipe 410.

The gas accommodating space 420 may be larger than the first part 310 and the second part 320.

The gas supplied from the gas supply may be introduced into the third part 330 and the fourth part 340 through the gas supply pipe 410 and the gas accommodating space 420.

In one embodiment, the third part 330 and the fourth part 340 may be arranged to be spaced apart from each other.

The gas supply pipe 410 may include a first supply pipe 412 and a second supply pipe 414.

Each of first ends of the first supply pipe 412 and the second supply pipe 414 may be connected to the gas supply.

The first supply pipe 412 and the second supply pipe 414 may be arranged to be spaced apart from each other.

The gas accommodating space 420 may include a first accommodating space 422 and a second accommodating space 424.

The first accommodating space 422 may be connected to a second end of the first supply pipe 412 and the third part 330.

The second accommodating space 424 may be connected to a second end of the second supply pipe 414 and the fourth part 340.

The second accommodating space 424 may be formed separately from the first accommodating space 422.

In one embodiment, the laser irradiating unit 100 and the electrode sheet 50 may be disposed at one side of the first jig 210, the second jig 220, the first part 310 and the second part 320 in a first direction.

The first part 310 and the second part 320 may be disposed at one side and other side in a second direction intersecting the first direction, respectively.

The third part 330 and the fourth part 340 may be disposed at other side of the first part 310 and the second part 320 in the first direction, respectively.

The first accommodating space 422 and the second accommodating space 424 may be disposed at the one side of the third part 330 in the second direction and the other side of the fourth part 340 in the second direction, respectively.

In one embodiment, the gas supply part 400 may include a flow controller.

The flow controller may be connected to the gas supply or the gas supply pipe 410.

In one embodiment, at least a portion of remaining sections of outer surfaces of the third part 330 and the fourth part 340 excluding first sections of the outer surfaces of the third part 330 and the fourth part 340 in contact with the first part 310 and the second part 320, respectively, and second sections of the outer surfaces connected to the gas supply part 400 may be blocked so as not to discharge gas to the outside.

In order to solve the above-described problem, the present invention provides an electrode notching method S700 including a notching process S710.

In the notching process S710, the laser irradiating unit 100 may irradiate a laser to the notching point N of the electrode sheet 50 to process the electrode sheet 50.

In the notching process S710, the first part 310 and the second part 320 may discharge gas.

### [ADVANTAGEOUS EFFECTS]

According to the embodiments of the present invention, an electrode notching apparatus 10 includes: a laser irradiating unit 100 processing an electrode sheet 50 by irradiating a laser to a notching point N of the electrode sheet 50; a jig 200 disposed facing the laser irradiating unit 100 with the electrode sheet 50 therebetween, supporting the electrode sheet 50 and comprising a first jig 210 and a second jig 220 spaced apart by a predetermined interval so that the laser processing the electrode sheet 50 passes through therebetween; a porous block 300 disposed facing the laser irradiating unit 100 with the electrode sheet 50 therebetween, disposed between the first jig 210 and the second jig 220, formed of a porous material and comprising a first part 310 and a second part 320 spaced apart by a predetermined interval so that the laser processing the electrode sheet 50 passes through therebetween and discharging gas into an interspace between the first part 310 and the second part 320; and a gas supply part 400 introducing gas into the porous block 300.

Accordingly, foreign substances such as fume generated during notching is not accumulated in or adhere to the porous block 300 and the jig 200 located near the notching point N. As a result, the problem of the electrode sheet 50 being damaged or contaminated by foreign substances such as fume accumulated in or adhered to an object (porous block and jig) located near the notching point N may be solved or reduced.

In addition, the cycle for halting the notching process for cleaning the jig, etc. to remove foreign substances such as fume accumulated in or adhered to an object (porous block and jig) located near the notching point N may be extended. Therefore, since the optimal environment (e.g., apparatus arrangement, shape/position/orientation of the jig, suction, etc.) set for notching the electrode sheet 50 may be maintained for a long time, the productivity, quality and uniformity of the electrode and secondary batteries may be improved, and the maintenance cost of the electrode notching apparatus may be reduced. Furthermore, since the reset cycle of the optimal environment is also extended, the manufacturing cost of the electrode and secondary batteries may be reduced.

In addition, since the first and second parts 310 and 320 include a porous material, gas may be discharged from numerous small-sized pores provided on the surfaces of the first and second parts 310 and 320. Accordingly, foreign substances such as fume may be effectively prevented from being accumulated in or adhered to the first and second parts 310 and 320 and their surroundings. Furthermore, since gas may be uniformly discharged from the surfaces of the first and second parts 310 and 320, gas discharged from the first and second parts 310 and 320 does not interfere with the notching of the electrode sheet 50.

According to the embodiments of the present invention, the first part 310 and the second part 320 may cover front end surfaces of the first jig 210 and the second jig 220, respectively.

Accordingly, even when the front end surfaces of the first and second jigs 210 and 220 are located close to the notching point N and do not discharge gas, foreign substances such as fume may not accumulate on or adhere to the front end surfaces of the first and second jigs 210 and 220 due to the first and second parts 310 and 320.

According to the embodiments of the present invention, the first part 310 and the second part 320 may contact front end portions of the first jig 210 and the second jig 220, respectively.

Accordingly, even when the front end portions of the first and second jigs 210 and 220 are located close to the notching point N and do not discharge gas, foreign substances such as fume may not accumulate on or adhere to the front end portions of the first and second jigs 210 and 220 due to the first and second parts 310 and 320.

According to the embodiments of the present invention, the first jig 210 and the second jig 220 may be in contact with the electrode sheet 50, and the first part 310 and the second part 320 may be in contact with or adjacent to the electrode sheet 50.

Accordingly, not only the first and second jigs 210 and 220 but also the first and second parts 310 and 320 may support the electrode sheet 50. As a result, even when the first and second parts 310 and 320 are disposed between the first and second jigs 210 and 220, the difference between the width D2 of the section where the electrode sheet 50 is not supported between the first and second jigs 210 and 220 and the width D1 of the notching hole H may be reduced. Accordingly, even when the first and second parts 310 and 320 are disposed between the first and second jigs 210 and 220, the electrode sheet 50 may be stably supported such that the distance between the laser irradiating unit 100 and the notching point N may be maintained constant as in the prior art. Therefore, even when the first and second parts 310 and 320 are disposed between the first and second jigs 210 and 220, the electrode sheet 50 may be processed (notched) correctly and effectively.

In addition, since the first and second parts 310 and 320 are in contact with or adjacent to the electrode sheet 50, foreign substances such as fume is prevented from moving toward the first and second jigs 210 and 220 through the space between the first and second parts 310 and 320 and the electrode sheet 50 even when the front end portions of the first and second jigs 210 and 220 are located close to the notching point N and do not discharge gas. Thus, the foreign substances do not accumulate on or adhered to the front end portions of the first and second jigs 210 and 220.

According to the embodiments of the present invention, the width D2 of the section between the first jig 210 and the second jig 220 where the electrode sheet 50 is not supported may be equal to the width D1 between the first part 310 and the second part 320.

Accordingly, even when the first and second parts 310 and 320 are disposed between the first and second jigs 210 and 220, the electrode sheet 50 may be stably supported as in the prior art such that the distance between the laser irradiating unit 100 and the notching point N may be maintained constant as in the prior art. Accordingly, even when the first and second parts 310 and 320 are disposed between the first and second jigs 210 and 220, the electrode sheet 50 may be processed (notched) correctly and effectively as in the prior art.

According to the embodiments of the present invention, one side surfaces of the first jig 210 and the second jig 220 in contact with the electrode sheet 50 and one side surfaces of the first part 310 and the second part 320 in contact with or adjacent to the electrode sheet 50 may together form a single spherical surface or a single planar surface.

Accordingly, even when the first and second parts 310 and 320 are disposed between the first and second jigs 210 and 220, the electrode sheet 50 may be stably supported to form a spherical surface or a planar surface as in the prior art such that the distance between the laser irradiating unit 100 and the notching point N may be maintained constant as in the prior art. Accordingly, even when the first and second parts 310 and 320 are arranged between the first and second jigs 210 and 220, the electrode sheet 50 may be processed (notched) correctly and effectively as in the past.

According to the embodiments of the present invention, one side surfaces S1 and S2 of the first part 310 and the second part 320 in contact with or facing the electrode sheet 50 or pores provided on the one side surfaces S1 and S2 of the first part and the second part in contact with or facing the electrode sheet 50 may be blocked to prevent discharge of gas toward the electrode sheet 50.

Accordingly, even when the first and second parts 310 and 320 discharge gas, the notching of the electrode sheet 50 is not hindered.

According to the embodiments of the present invention, the electrode notching apparatus 10 may further include an inlet 512 for sucking in foreign matter and gas. The laser irradiating unit 100 and the electrode sheet 50 may be disposed at one side of the first jig 210, the second jig 220, the first part 310 and the second part 320 in a first direction. The first jig 210 and the second jig 220 may be disposed at one side and other side in a second direction intersecting the first direction, respectively. The first part 310 and the second part 320 may be disposed at one side and other side in the second direction, respectively. The inlet 512 may be disposed adjacent to the notching point N, the first part 310, and the second part 320 and disposed at one side or other side of the notching point N, the first part 310 and the second part 320 in a third direction intersecting the first direction and the second direction.

Accordingly, even when gas is discharged in the first direction from one side surfaces of the first part 310 and the second part 320, the gas quickly flows into the inlet 512 such that the notching of the electrode sheet 50 is not significantly interfered.

According to the embodiments of the present invention, the porous block 300 may include: a third part 330 coupled to and introducing gas into the first part 310 the first part 310; and a fourth part 340 coupled to and introducing gas into the second part 320. The sizes of the third part 330 and the fourth part 340 may be larger than the sizes of the first part 310 and the second part 320, respectively. The gas supply part 400 may introduce gas into the third part 330 and the fourth part 340.

Accordingly, gas may be discharged uniformly and stably from the first and second parts 310 and 320.

According to the embodiments of the present invention, the gas supply part 400 may include: a gas supply; a gas supply pipe 410 having a first end connected to the gas supply; and a gas accommodating space 420 larger than the first part 310 and the second part 320 and connected to the third part 330, the fourth part 340 and a second end of the gas supply pipe 410. The gas supplied from the gas supply may be introduced into the third part 330 and the fourth part 340 through the gas supply pipe 410 and the gas accommodating space 420.

Accordingly, since gas is supplied to the third and fourth parts 330 and 340 through the gas accommodating space 420, the gas may be supplied uniformly and stably to the third and fourth parts 330 and 340. Accordingly, gas may be discharged uniformly and stably from the first and second parts 310 and 320.

In addition, since the gas accommodating space 420 is provided, the pressure of the gas discharged from the first and second parts 310 and 320 may be stably controlled. For example, by increasing the amount of gas supplied to the gas accommodating space 420 to increase the pressure inside the gas accommodating space 420, high-pressure gas may be discharged from the first and second parts 310 and 320. Contrarily, by reducing the amount of gas supplied to the gas accommodating space 420 to depressurize the gas accommodating space 420, relatively low-pressure gas may be discharged from the first and second parts 310 and 320.

According to the embodiments of the present invention, the third part 330 and the fourth part 340 may be arranged to be spaced apart from each other. The gas supply pipe 410 may include a first supply pipe 412 and a second supply pipe 414 spaced apart from each other and having first ends connected to the gas supply. The gas accommodating space 420 may include: a first accommodating space 422 connected to a second end of the first supply pipe 412 and the third part 330; and a second accommodating space 424 connected to a second end of the second supply pipe 414 and the fourth part 340 and formed separately from the first accommodating space 422.

Accordingly, since gas is individually introduced into the first and second parts 310 and 320, the amount or pressure of gas discharged from the first and second parts 310 and 320 may be individually and easily controlled, and the amount or pressure of gas discharged from the first and second parts 310 and 320 may be uniform.

According to the embodiments of the present invention, the laser irradiating unit 100 and the electrode sheet 50 may be disposed at one side of the first jig 210, the second jig 220, the first part 310 and the second part 320 in a first direction. The first part 310 and the second part 320 may be disposed at one side and other side in a second direction intersecting the first direction, respectively. The third part 330 and the fourth part 340 may be disposed at other side of the first part 310 and the second part 320 in the first direction, respectively. The first accommodating space 422 and the second accommodating space 424 may be disposed at the one side of the third part 330 in the second direction and the other side of the fourth part 340 in the second direction, respectively.

Accordingly, since the gas supply part 400 is symmetric in the second direction, the intensity, direction, etc. of the gas discharged from the first part 310 and the gas discharged from the second part 320 may be similar. Accordingly, foreign substances such as fume may not accumulate on or adhere to the first and second parts 310 and 320 along the second direction.

According to the embodiments of the present invention, the gas supply part 400 may include a flow controller connected to the gas supply or the gas supply pipe 410.

Accordingly, the amount or pressure of the gas discharged from the first and second parts 310 and 320 may be controlled. In addition, when the notching process is halted or in standby, the gas discharged from the first and second parts 310 and 320 may be reduced or blocked to prevent shaking of the electrode sheet 50 or changing in the laser focal length.

According to the embodiments of the present invention, at least a portion of remaining sections of outer surfaces of the third part 330 and the fourth part 340 excluding first sections of the outer surfaces of the third part 330 and the fourth part 340 in contact with the first part 310 and the second part 320, respectively, and second sections of the outer surfaces connected to the gas supply part 400 may be blocked so as to prevent discharge of gas to the outside.

Accordingly, gas may be discharged uniformly and stably from the first and second parts 310 and 320.

According to the embodiments of the present invention, the electrode notching method S700 may include a notching process S710 wherein the laser irradiating unit 100 irradiates a laser to the notching point N of the electrode sheet 50 to process the electrode sheet 50. In the notching process S710, the first part 310 and the second part 320 may discharge gas.

Accordingly, foreign substances such as fume generated during notching is not accumulated in or adhere to the porous block 300 and the jig 200 located near the notching point N. As a result, the problem of the electrode sheet 50 being damaged or contaminated by foreign substances such as fume accumulated in or adhered to an object (porous block and jig) located near the notching point N may be solved or reduced.

In addition, the cycle for halting the notching process for cleaning the jig, etc. to remove foreign substances such as fume accumulated in or adhered to an object (porous block and jig) located near the notching point N may be extended. Therefore, since the optimal environment (e.g., apparatus arrangement, shape/position/orientation of the jig, suction, etc.) set for notching the electrode sheet 50 may be maintained for a long time, the productivity, quality and uniformity of the electrode and secondary batteries may be improved, and the maintenance cost of the electrode notching apparatus may be reduced. Furthermore, since the reset cycle of the optimal environment is also extended, the manufacturing cost of the electrode and secondary batteries may be reduced.

In addition, since the first and second parts 310 and 320 include a porous material, gas may be discharged from numerous small-sized pores provided on the surfaces of the first and second parts 310 and 320. Accordingly, foreign substances such as fume may be effectively prevented from being accumulated in or adhered to the first and second parts 310 and 320 and their surroundings. Furthermore, since gas may be uniformly discharged from the surfaces of the first and second parts 310 and 320, gas discharged from the first and second parts 310 and 320 does not interfere with the notching of the electrode sheet 50.

In addition to the advantageous effects described above, specific effects of the present invention will be described further while describing specific details of the present invention.

### [BRIEF DESCRIPTION OF DRAWINGS]

FIGS. 1 to 3 are side views and front views schematically illustrating an electrode notching apparatus according to an embodiment of the present invention.
FIG. 4 is a side view schematically illustrating the first part and the second part of the porous block of the electrode notching apparatus of FIGS. 1 to 3 with side surfaces thereof blocked.
FIGS. 5 and 6 are side views and front views schematically illustrating the electrode notching apparatus of FIGS. 1 to 4 with a suction tube disposed thereto.
FIG. 7 is a flow chart of an electrode notching method according to an embodiment of the present invention.

### [DESCRIPTION OF REFERENCE NUMERALS]

| | | | |
|---|---|---|---|
| 10: | electrode notching apparatus | 50: | electrode sheet |
| N: | notching point | 100: | laser irradiating unit |
| 200: | jig | 210: | first jig |
| 220: | second jig | 300: | porous block |
| 310: | first part | 320: | second part |
| 330: | third part | 340: | fourth part |
| 400: | gas supply | 410: | gas supply pipe |
| 412: | first supply pipe | 414: | second supply pipe |
| 420: | gas accommodating space | 422: | first accommodating space |
| 424: | second accommodating space | 512: | inlet |

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

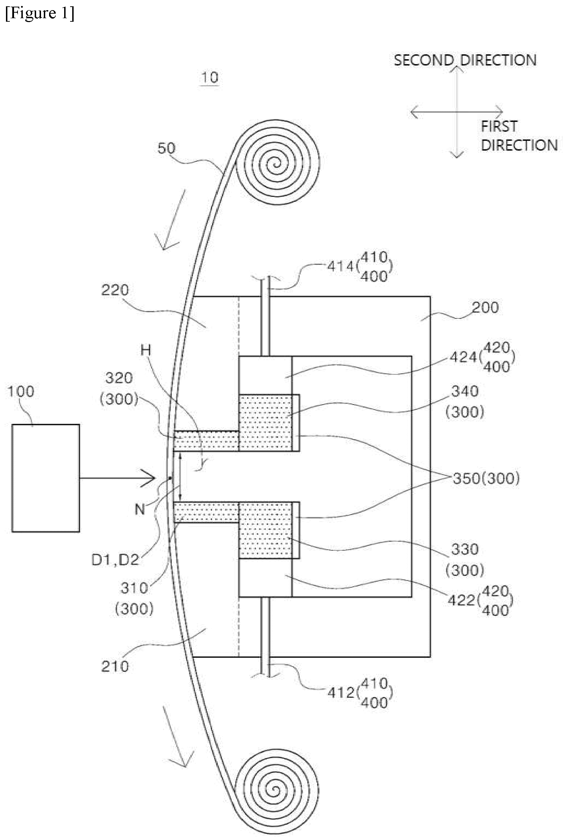

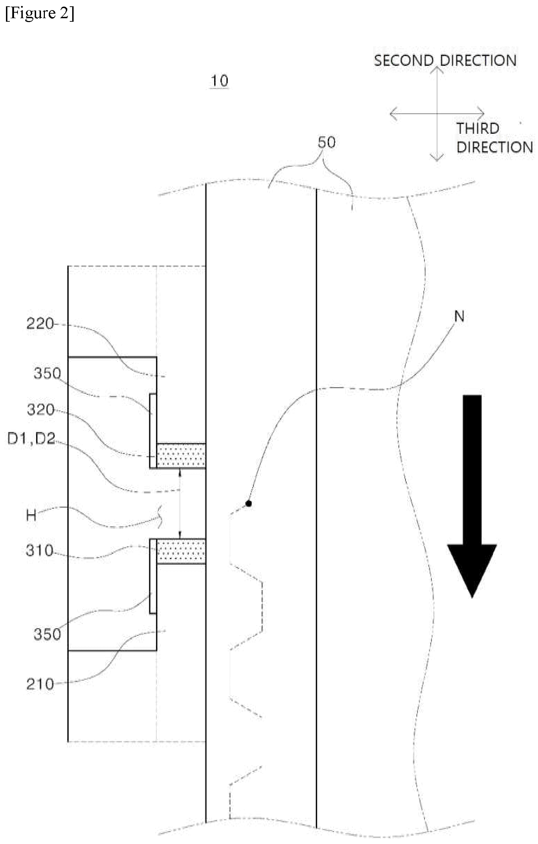

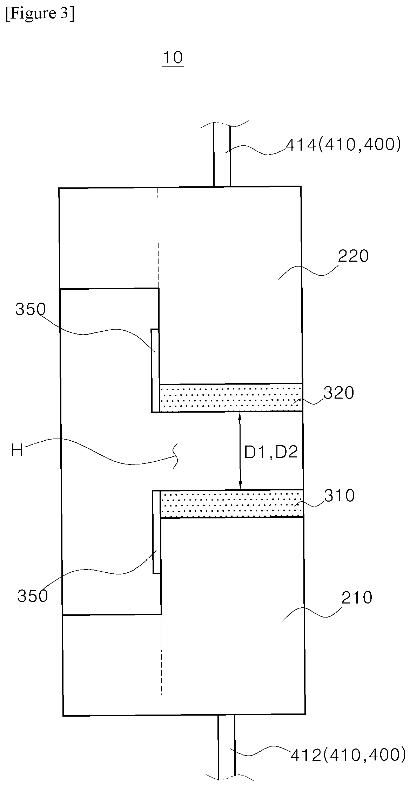

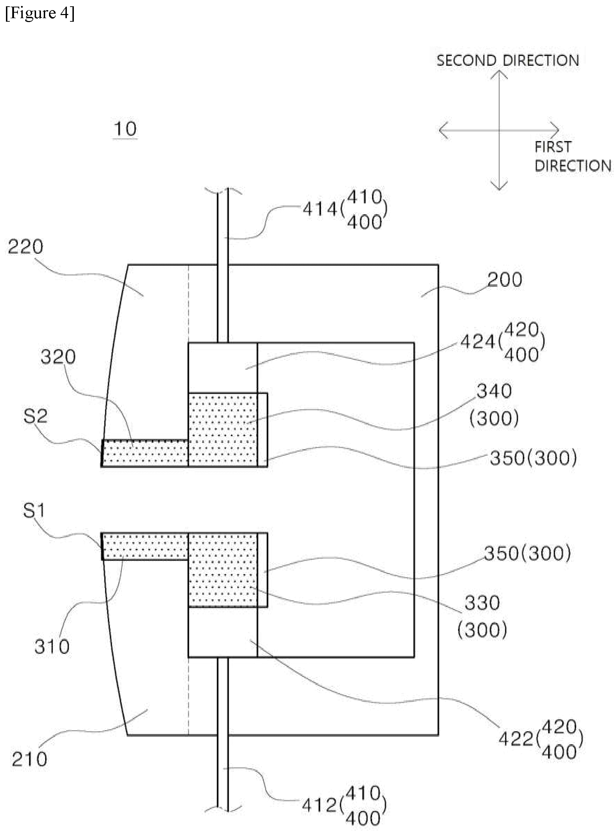

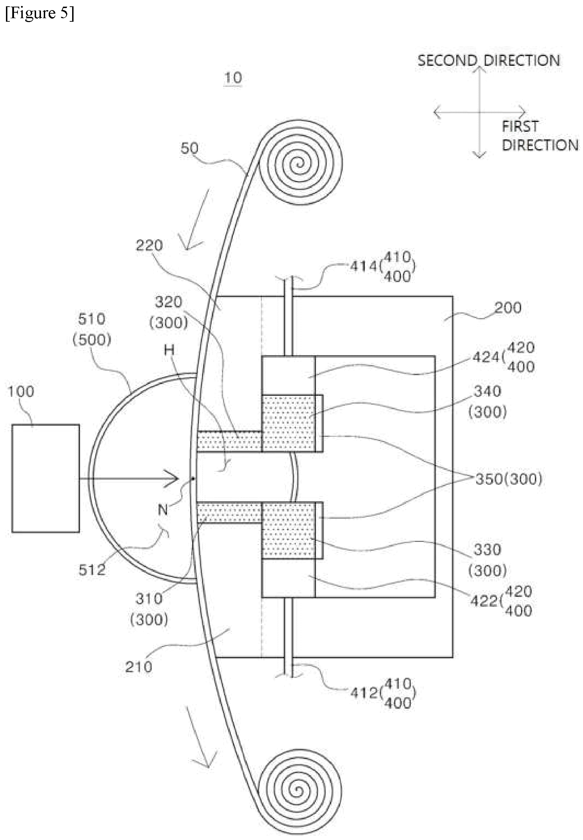

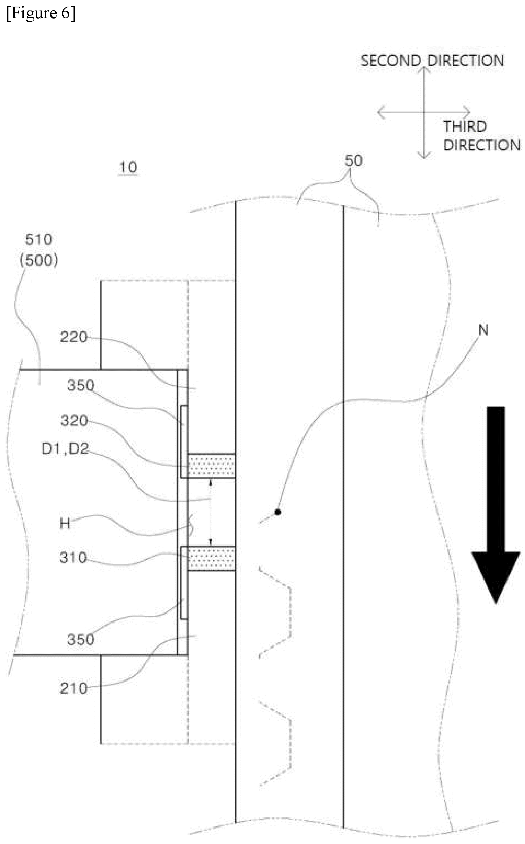

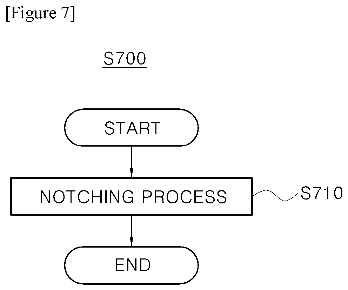

FIGS. 1 to 3 are side views and front views schematically illustrating an electrode notching apparatus according to an embodiment of the present invention. FIG. 4 is a side view schematically illustrating the first part and the second part of the porous block of the electrode notching apparatus of FIGS. 1 to 3 with side surfaces thereof blocked. FIGS. 5 and 6 are side views and front views schematically illustrating the electrode notching apparatus of FIGS. 1 to 4 with a suction tube disposed thereto. FIG. 7 is a flow chart of an electrode notching method according to an embodiment of the present invention.

### [ELECTRODE NOTCHING APPARATUS]

Referring to FIGS. 1 to 6, an electrode notching apparatus 10 may include a laser irradiating unit 100, a jig 200, a porous block 300 and a gas supply part 400. The electrode notching apparatus 10 may further include a suction unit 500.

The laser irradiating unit 100 may process the electrode sheet 50 by irradiating a laser to a notching point N thereof. For example, the laser irradiating unit 100 may irradiate the laser in the first direction.

The laser irradiating unit 100 and the electrode sheet 50 may be disposed at one side (e.g., front side) of the first jig 210, the second jig 220, the first part 310 and the second part 320 in a first direction (e.g., front-rear direction).

The jig 200 may be disposed facing the laser irradiating unit 100 with the electrode sheet 50 interposed therebetween. The jig 200 may support the electrode sheet 50. The jig 200 may include a first jig 210 and a second jig 220.

The first jig 210 and the second jig 220 may be spaced apart by a predetermined interval so that the laser that processes the electrode sheet 50 may pass through therebetween. The first jig 210 and the second jig 220 may be disposed at one side (e.g., lower side) and other side (e.g., upper side) in a second direction (e.g., vertical direction) that intersects the first direction, respectively.

The first jig 210 and the second jig 220 may be in contact with the electrode sheet 50.

### [POROUS BLOCK AND GAS SUPPLY PART]

The porous block 300 may be disposed facing the laser irradiating unit 100 with the electrode sheet 50 interposed therebetween. The porous block 300 may be at least partially disposed between the first jig 210 and the second jig 220.

The porous block 300 may be formed of a porous material. The porous material may include a porous ceramic material. The pores of the porous block 300 may be 0.1-100µm in size. The pores of the porous block 300 may be open pores exposed through the surface of the porous block 300. Accordingly, gas introduced into the porous block 300 through a first side surface of the porous block 300 may be (finely) discharged to the outside through a second side surface of the porous block 300.

The porous block 300 may include a first part 310 and a second part 320. The porous block 300 may include a third part 330 and a fourth part 340.

The first part 310 and the second part 320 may be disposed between the first jig 210 and the second jig 220. The first part 310 and the second part 320 may be spaced apart by a predetermined interval so that the laser that processes the electrode sheet 50 may pass through therebetween. The first part 310 and the second part 320 may be disposed at one side (e.g., lower side) and other side (e.g., upper side) in the second direction intersecting the first direction. The space between the first and second parts 310 and 320 may be a notching hole H for passing the laser therethrough.

The first part 310 and the second part 320 may discharge gas into an interspace between the first part 310 and the second part 320.

The first part 310 and the second part 320 may cover front end surfaces of the first jig 210 and the second jig 220, respectively.

Accordingly, even when the front end surfaces of the first and second jigs 210 and 220 are located close to the notching point N and do not discharge gas, foreign substances such as fume may not accumulate on or adhere to the front end surfaces of the first and second jigs 210 and 220 due to the first and second parts 310 and 320. Here, the fume may be generated when the electrode sheet 50 of the metal material is irradiated with a laser and evaporates or condenses instantaneously.

The first part 310 and the second part 320 may be in contact with or adjacent to the electrode sheet 50. Here, the first jig 210 and the second jig 220 may be in contact with the electrode sheet 50.

Accordingly, not only the first and second jigs 210 and 220 but also the first and second parts 310 and 320 may support the electrode sheet 50. As a result, even when the first and second parts 310 and 320 are disposed between the first and second jigs 210 and 220, the difference between the width D2 of the section where the electrode sheet 50 is not supported between the first and second jigs 210 and 220 and the width D1 of the notching hole H may be reduced. Accordingly, even when the first and second parts 310 and 320 are disposed between the first and second jigs 210 and 220, the electrode sheet 50 may be stably supported such that the distance between the laser irradiating unit 100 and the notching point N may be maintained constant as in the prior art. Therefore, even when the first and second parts 310 and 320 are disposed between the first and second jigs 210 and 220, the electrode sheet 50 may be processed (notched) correctly and effectively.

In addition, since the first and second parts 310 and 320 are in contact with or adjacent to the electrode sheet 50, foreign substances such as fume is prevented from moving toward the first and second jigs 210 and 220 through the space between the first and second parts 310 and 320 and the electrode sheet 50 even when the front end portions of the first and second jigs 210 and 220 are located close to the notching point N and do not discharge gas. Thus, the foreign substances do not accumulate on or adhered to the front end portions of the first and second jigs 210 and 220.

For example, the first and second parts 310 and 320 may have a length of 0.5 mm or more and 10 mm or less from the front ends of the first and second jigs 210 and 220 toward the front side, respectively.

The width D2 of the section between the first jig 210 and the second jig 220 where the electrode sheet 50 is not supported may be equal to the width D1 between the first part 310 and the second part 320.

Accordingly, even when the first and second parts 310 and 320 are disposed between the first and second jigs 210 and 220, the electrode sheet 50 may be stably supported as in the prior art such that the distance between the laser irradiating unit 100 and the notching point N may be maintained constant as in the prior art. Accordingly, even when the first and second parts 310 and 320 are disposed between the first and second jigs 210 and 220, the electrode sheet 50 may be processed (notched) correctly and effectively as in the prior art.

One side surfaces of the first jig 210 and the second jig 220 in contact with the electrode sheet 50 and one side surfaces of the first part 310 and the second part 320 in contact with or adjacent to the electrode sheet 50 together form a single spherical surface or a single planar surface. That is, the first and second parts 310 and 320 may be connected to the front end portions of the first and second jigs 210 and 220 without a step.

Accordingly, even when the first and second parts 310 and 320 are disposed between the first and second jigs 210 and 220, the electrode sheet 50 may be stably supported to form a spherical surface or a planar surface as in the prior art such that the distance between the laser irradiating unit 100 and the notching point N may be maintained constant as in the prior art. Accordingly, even when the first and second parts 310 and 320 are arranged between the first and second jigs 210 and 220, the electrode sheet 50 may be processed (notched) correctly and effectively as in the past.

The first part 310 and the second part 320 may be in contact with the front end portions of the first jig 210 and the second jig 220, respectively.

Accordingly, even when the front end portions of the first and second jigs 210 and 220 are located close to the notching point N and do not discharge gas, foreign substances such as fume may not accumulate on or adhere to the front end portions of the first and second jigs 210 and 220 due to the first and second parts 310 and 320.

One side surfaces S1 and S2 of the first part 310 and the second part 320 in contact with or facing the electrode sheet 50 or pores provided on the one side surfaces S1 and S2 of the first part 310 and the second part 320 in contact with or facing the electrode sheet 50 may be blocked so as to prevent discharge of gas toward the electrode sheet 50. For example, the one side surfaces S1 and S2 of the first part 310 and the second part 320 in the first direction may be coated with a predetermined material to be covered, or the pores of the one side surfaces S1 and S2 of the first part 310 and the second part 320 may be processed to be covered (FIG. 4).

Accordingly, even when the first and second parts 310 and 320 discharge gas, the notching of the electrode sheet 50 is not hindered.

The third part 330 may be coupled to the first part 310. The third part 330 may introduce gas into the first part 310.

The fourth part 340 may be coupled to the second part 320. The fourth part 340 may introduce gas into the second part 320.

The sizes of the third part 330 and the fourth part 340 may be larger than the sizes of the first part 310 and the second part 320, respectively.

The third part 330 and the fourth part 340 may be arranged to be spaced apart from each other.

The third part 330 and the fourth part 340 may be disposed at other side (e.g., right side) of the first part 310 and the second part 320 in the first direction, respectively.

### [GAS SUPPLY PART]

The gas supply part 400 may introduce gas into the porous block 300.

As described above, the electrode notching apparatus 10 may include the laser irradiating unit 100, the jig 200, the porous block 300 and the gas supply part 400. Accordingly, foreign substances such as fume generated during notching is not accumulated in or adhere to the porous block 300 and the jig 200 located near the notching point N. As a result, the problem of the electrode sheet 50 being damaged or contaminated by foreign substances such as fume accumulated in or adhered to an object (porous block and jig) located near the notching point N may be solved or reduced.

In addition, the cycle for halting the notching process for cleaning the jig, etc. to remove foreign substances such as fume accumulated in or adhered to an object (porous block and jig) located near the notching point N may be extended. Therefore, since the optimal environment (e.g., apparatus arrangement, shape/position/orientation of the jig, suction, etc.) set for notching the electrode sheet 50 may be maintained for a long time, the productivity, quality and uniformity of the electrode and secondary batteries may be improved, and the maintenance cost of the electrode notching apparatus may be reduced. Furthermore, since the reset cycle of the optimal environment is also extended, the manufacturing cost of the electrode and secondary batteries may be reduced.

In addition, since the first and second parts 310 and 320 include a porous material, gas may be discharged from numerous small-sized pores provided on the surfaces of the first and second parts 310 and 320. Accordingly, foreign substances such as fume may be effectively prevented from being accumulated in or adhered to the first and second parts 310 and 320 and their surroundings. Furthermore, since gas may be uniformly discharged from the surfaces of the first and second parts 310 and 320, gas discharged from the first and second parts 310 and 320 does not interfere with the notching of the electrode sheet 50.

The gas supply part 400 may introduce gas into the third part 330 and the fourth part 340.

Accordingly, gas may be discharged uniformly and stably from the first and second parts 310 and 320.

The gas supply part 400 may include a gas supply, a gas supply pipe 410, and a gas accommodating space 420. The gas supply part 400 may include a flow controller.

The gas supply (not shown) may supply gas.

The gas supply pipe 410 may include a first supply pipe 412 and a second supply pipe 414. Each of first ends of the first supply pipe 412 and the second supply pipe 414 may be connected to the gas supply. The first supply pipe 412 and the second supply pipe 414 may be arranged to be spaced apart from each other.

The gas accommodating space 420 may be connected to the third part 330, the fourth part 340 and a second end of the gas supply pipe 410. The gas accommodating space 420 may be larger than the first part 310 and the second part 320. Here, the gas accommodating space 420 may be larger than the first part 310 and the second part 320 in volume.

The gas accommodating space 420 may include a first accommodating space 422 and a second accommodating space 424.

The first accommodating space 422 may be connected to a second end of the first supply pipe 412 and the third part 330 of. The second accommodating space 424 may be connected to a second end of the second supply pipe 414 and the fourth part 340. The second accommodating space 424 may be formed separately from the first accommodating space 422.

Accordingly, since gas is individually introduced into the first and second parts 310 and 320, the amount or pressure of gas discharged from the first and second parts 310 and 320 may be individually and easily controlled, and the amount or pressure of gas discharged from the first and second parts 310 and 320 may be uniform.

The gas supplied from the gas supply may be introduced into the third part 330 and the fourth part 340 through the gas supply pipe 410 and the gas accommodating space 420.

Accordingly, since gas is supplied to the third and fourth parts 330 and 340 through the gas accommodating space 420, the gas may be supplied uniformly and stably to the third and fourth parts 330 and 340. Accordingly, gas may be discharged uniformly and stably from the first and second parts 310 and 320.

In addition, since the gas accommodating space 420 is provided, the pressure of the gas discharged from the first and second parts 310 and 320 may be stably controlled. For example, by increasing the amount of gas supplied to the gas accommodating space 420 to increase the pressure inside the gas accommodating space 420, high-pressure gas may be discharged from the first and second parts 310 and 320. Contrarily, by reducing the amount of gas supplied to the gas accommodating space 420 to depressurize the gas accommodating space 420, relatively low-pressure gas may be discharged from the first and second parts 310 and 320.

The first accommodating space 422 and the second accommodating space 424 may be disposed at the one side of the third part 330 in the second direction and the other side of the fourth part 340 in the second direction, respectively. Here, as described above, the first part 310 and the second part 320 may be disposed at one side and other side in the second direction, and the third part 330 and the fourth part 340 may be disposed at other side of the first part 310 and the second part 320 in the first direction, respectively.

Accordingly, since the gas supply part 400 is symmetric in the second direction, the intensity, direction, etc. of the gas discharged from the first part 310 and the gas discharged from the second part 320 may be similar. Accordingly, foreign substances such as fume may not accumulate on or adhere to the first and second parts 310 and 320 along the second direction.

The flow controller may be connected to the gas supply or the gas supply pipe 410.

Accordingly, the amount or pressure of the gas discharged from the first and second parts 310 and 320 may be controlled. In addition, when the notching process is halted or in standby, the gas discharged from the first and second parts 310 and 320 may be reduced or blocked to prevent shaking of the electrode sheet 50 or changing in the laser focal length.

According to the embodiments of the present invention, at least a portion of remaining sections of outer surfaces of the third part 330 and the fourth part 340 excluding first sections of the outer surfaces of the third part 330 and the fourth part 340 in contact with the first part 310 and the second part 320, respectively, and second sections of the outer surfaces connected to the gas supply part 400 may be blocked so as not to discharge gas to the outside. For example, the at least a portion may be blocked by being coated with a predetermined material, or may be covered with a cover 350, or may be processed such that at least a portion of the pores are covered.

Accordingly, gas may be discharged uniformly and stably from the first and second parts 310 and 320.

### [SUCTION UNIT]

The suction unit 500 may include a suction device (not shown) and a suction pipe 510. An inlet 512 may be provided at an end of the suction pipe 510. Foreign matter and gas may be sucked in through the inlet 512. Here, the foreign matter may include fume generated during notching.

The inlet 512 may be disposed adjacent to the notching point N, the first part 310, and the second part 320. The inlet 512 may be disposed at one side or other side of the notching point N, the first part 310 and the second part 320 in a third direction (e.g., left-right direction) intersecting the first direction and the second direction (FIG. 5, FIG. 6).

Accordingly, even when gas is discharged in the first direction from the one side surface of the first part 310 and the second part 320, the gas may quickly flow into the inlet 512 such that the notching of the electrode sheet 50 is not significantly interfered with.

### [ELECTRODE NOTCHING METHOD]

Referring to FIG. 15, an electrode notching method according to an embodiment of the present invention may include a notching process S710.

In the notching process S710, the laser irradiating unit 100 may irradiate a laser to the notching point N of the electrode sheet 50 to process the electrode sheet 50.

Here, the first part 310 and the second part 320 may discharge gas.

Accordingly, foreign substances such as fume generated during notching is not accumulated in or adhere to the porous block 300 and the jig 200 located near the notching point N. As a result, the problem of the electrode sheet 50 being damaged or contaminated by foreign substances such as fume accumulated in or adhered to an object (porous block and jig) located near the notching point N may be solved or reduced.

In addition, the cycle for halting the notching process for cleaning the jig, etc. to remove foreign substances such as fume accumulated in or adhered to an object (porous block and jig) located near the notching point N may be extended. Therefore, since the optimal environment (e.g., apparatus arrangement, shape/position/orientation of the jig, suction, etc.) set for notching the electrode sheet 50 may be maintained for a long time, the productivity, quality and uniformity of the electrode and secondary batteries may be improved, and the maintenance cost of the electrode notching apparatus may be reduced. Furthermore, since the reset cycle of the optimal environment is also extended, the manufacturing cost of the electrode and secondary batteries may be reduced.

In addition, since the first and second parts 310 and 320 include a porous material, gas may be discharged from numerous small-sized pores provided on the surfaces of the first and second parts 310 and 320. Accordingly, foreign substances such as fume may be effectively prevented from being accumulated in or adhered to the first and second parts 310 and 320 and their surroundings. Furthermore, since gas may be uniformly discharged from the surfaces of the first and second parts 310 and 320, gas discharged from the first and second parts 310 and 320 does not interfere with the notching of the electrode sheet 50.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. An electrode notching apparatus comprising:
a laser irradiating unit 100 processing an electrode sheet 50 by irradiating a laser to a notching point N of the electrode sheet 50;
a jig 200 disposed facing the laser irradiating unit 100 with the electrode sheet 50 therebetween, supporting the electrode sheet 50 and comprising a first jig 210 and a second jig 220 spaced apart by a predetermined interval so that the laser processing the electrode sheet 50 passes through therebetween;
a porous block 300 disposed facing the laser irradiating unit 100 with the electrode sheet 50 therebetween, disposed between the first jig 210 and the second jig 220, formed of a porous material and comprising a first part 310 and a second part 320 spaced apart by a predetermined interval so that the laser processing the electrode sheet 50 passes through therebetween and discharging gas into an interspace between the first part 310 and the second part 320; and
a gas supply part 400 introducing gas into the porous block 300.

2. The electrode notching apparatus of claim 1, wherein the first part 310 and the second part 320 cover front end surfaces of the first jig 210 and the second jig 220, respectively.

3. The electrode notching apparatus of claim 2, wherein the first part 310 and the second part 320 are in contact with front end portions of the first jig 210 and the second jig 220, respectively.

4. The electrode notching apparatus of any one of claims 1 to 3, wherein the first jig 210 and the second jig 220 are in contact with the electrode sheet 50, and the first part 310 and the second part 320 are in contact with or adjacent to the electrode sheet 50.

5. The electrode notching apparatus of claim 4, wherein a width D2 of a section between the first jig 210 and the second jig 220 where the electrode sheet 50 is not supported is equal to a width D1 between the first part 310 and the second part 320.

6. The electrode notching apparatus of claims 4 to 5, wherein one side surfaces of the first jig 210 and the second jig 220 in contact with the electrode sheet 50 and one side surfaces of the first part 310 and the second part 320 in contact with or adjacent to the electrode sheet 50 together form a single spherical surface or a single planar surface.

7. The electrode notching apparatus of any one of claims 4 to 6, wherein one side surfaces S1 and S2 of the first part 310 and the second part 320 in contact with or facing the electrode sheet 50 or pores provided on the one side surfaces S1 and S2 of the first part and the second part in contact with or facing the electrode sheet 50 are blocked so as to prevent discharge of gas toward the electrode sheet 50.

8. The electrode notching apparatus of any one of claims 1 to 7, further comprising: an inlet 512 for sucking in foreign matter and gas,
wherein the laser irradiating unit 100 and the electrode sheet 50 are disposed at one side of the first jig 210, the second jig 220, the first part 310 and the second part 320 in a first direction,
the first jig 210 and the second jig 220 are disposed at one side and other side in a second direction intersecting the first direction, respectively,
the first part 310 and the second part 320 are disposed at one side and other side in the second direction, respectively, and
the inlet 512 is disposed adjacent to the notching point N, the first part 310 and the second part 320 and disposed at one side or other side of the notching point N, the first part 310 and the second part 320 in a third direction intersecting the first direction and the second direction.

9. The electrode notching apparatus of any one of claims 1 to 8, wherein the porous block 300 comprises: a third part 330 coupled to and introducing gas into the first part 310; and a fourth part 340 coupled to and introducing gas into the second part 320,
the sizes of the third part 330 and the fourth part 340 are larger than the sizes of the first part 310 and the second part 320, respectively, and
the gas supply part 400 introduces gas into the third part 330 and the fourth part 340.

10. The electrode notching apparatus of claim 9, wherein the gas supply part 400 comprises a gas supply; a gas supply pipe 410 having a first end connected to the gas supply; and a gas accommodating space 420 larger than the first part 310 and the second part 320 and connected to the third part 330, the fourth part 340 and a second end of the gas supply pipe 410, and
gas supplied from the gas supply is introduced into the third part 330 and the fourth part 340 through the gas supply pipe 410 and the gas accommodating space 420.

11. The electrode notching apparatus of claim 10, wherein the third part 330 and the fourth part 340 are arranged to be spaced apart from each other,
the gas supply pipe 410 comprises a first supply pipe 412 and a second supply pipe 414 spaced apart from each other, each of first ends of the first supply pipe 412 and the second supply pipe 414 connected to the gas supply, and
the gas accommodating space 420 comprises: a first accommodating space 422 connected to a second end of the first supply pipe 412 and the third part 330; and a second accommodating space 424 connected to a second end of the second supply pipe 414 and the fourth part 340 and formed separately from the first accommodating space 422.

12. The electrode notching apparatus of claim 11, wherein the laser irradiating unit 100 and the electrode sheet 50 are disposed at one side of the first jig 210, the second jig 220, the first part 310 and the second part 320 in a first direction,
the first part 310 and the second part 320 are disposed at one side and other side in a second direction intersecting the first direction, respectively,
the third part 330 and the fourth part 340 are disposed at other side of the first part 310 and the second part 320 in the first direction, respectively, and
the first accommodating space 422 and the second accommodating space 424 are disposed at the one side of the third part 330 in the second direction and the other side of the fourth part 340 in the second direction, respectively.

13. The electrode notching apparatus of any one of claims 10 to 12, wherein the gas supply part 400 comprises a flow controller connected to the gas supply or the gas supply pipe 410.

14. The electrode notching apparatus of any one of claims 9 to 13, wherein at least a portion of remaining sections of outer surfaces of the third part 330 and the fourth part 340 excluding first sections of the outer surfaces of the third part 330 and the fourth part 340 in contact with the first part 310 and the second part 320, respectively, and second sections of the outer surfaces connected to the gas supply part 400 is blocked so as to prevent discharge of gas to outside.

15. An electrode notching method S700 using an electrode notching apparatus 10 of any one of claims 1 to 14, comprising:
a notching process S710 wherein the laser irradiating unit 100 irradiates a laser to the notching point N of the electrode sheet 50 to process the electrode sheet 50,
wherein in the notching process S710, the first part 310 and the second part 320 discharge gas.
